(19) Europäisches Patentamt / European Patent Office / Office européen des brevets

(11) **EP 4 310 006 B1**

(12) **FASCICULE DE BREVET EUROPEEN**

(45) Date de publication et mention
de la délivrance du brevet:
**06.11.2024   Bulletin 2024/45**

(21) Numéro de dépôt: **23184646.0**

(22) Date de dépôt: **11.07.2023**

(51) Classification Internationale des Brevets (IPC):
***B64D 33/00*** *(2006.01)*     ***H02J 4/00*** *(2006.01)*
***H02J 7/00*** *(2006.01)*

(52) Classification Coopérative des Brevets (CPC):
**B64D 33/00; H02J 4/00;** B64D 2221/00; H02J 7/34;
H02J 2310/44

(54) **SYSTÈME D'ALIMENTATION ÉLECTRIQUE D'UN AÉRONEF**

STROMVERSORGUNGSSYSTEM FÜR EIN FLUGZEUG

AIRCRAFT POWER SUPPLY SYSTEM

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:   **19.07.2022   FR 2207394**

(43) Date de publication de la demande:
**24.01.2024   Bulletin 2024/04**

(73) Titulaire: **AIRBUS OPERATIONS (S.A.S.)
31060 Toulouse (FR)**

(72) Inventeurs:
• **BRADIER, Matthieu**
**31060 TOULOUSE (FR)**
• **KAHALERRAS, Mohamed Khaled**
**31060 TOULOUSE (FR)**

(74) Mandataire: **Airbus-OPS SAS
LLF-M0101/1
316, route de Bayonne
31060 Toulouse Cedex (FR)**

(56) Documents cités:
**EP-B1- 3 130 783     FR-A1- 3 067 874
GB-A- 2 491 982**

## Description

L'invention est relative au domaine de l'alimentation électrique des aéronefs. Un aéronef comporte généralement un ensemble de générateurs électriques prévus pour alimenter électriquement des charges électriques de l'aéronef, telles par exemple que des calculateurs, des actionneurs, etc. Les charges électriques sont par exemple couplées au générateur électrique par l'intermédiaire d'un coeur électrique de l'aéronef. Un générateur électrique est par exemple entraîné mécaniquement par un moteur de propulsion de l'aéronef, de façon à permettre le fonctionnement dudit générateur. Par exemple, le document FR3067874A1 divulgue un système d'alimentation électrique d'un aéronef, ledit système comprenant au moins une première source électrique et une deuxième source électrique couplées ensemble pour alimenter électriquement un ensemble de charges électriques de l'aéronef, ainsi qu'un contrôleur configuré pour contrôler la première source électrique et la deuxième source électrique, la première source électrique étant couplée mécaniquement à une source primaire d'énergie, dans lequel le contrôleur est configuré pour:

- déterminer une consommation électrique courante consommée par ledit ensemble de charges électriques;

le contrôleur étant en outre configuré pour:

- déterminer une puissance nominale courante susceptible d'être délivrée par la source primaire d'énergie; et
- contrôler la première source électrique et la deuxième source électrique de telle façon que d'une part la puissance prélevée par la première source électrique sur la source primaire d'énergie garantit que la puissance mécanique prélevée par la première source électrique n'est jamais supérieure à la puissance nominale courante susceptible d'être délivrée par la source primaire d'énergie et que d'autre part une puissance électrique délivrée par la deuxième source électrique soit telle que la somme d'une puissance électrique délivrée par la première source électrique et de la puissance électrique délivrée par la deuxième source électrique corresponde à la consommation électrique courante.

Par ailleurs, un ou plusieurs autres utilisateurs d'énergie peuvent être couplés mécaniquement au moteur de propulsion, en particulier une pompe d'un circuit hydraulique de l'aéronef. Ainsi, un tel générateur électrique et de tels autres utilisateurs prélèvent une partie de la puissance mécanique délivrée par le moteur de propulsion. Par conséquent, le couplage mécanique du générateur électrique et des autres utilisateurs d'énergie au moteur de propulsion, contraint de prévoir une vitesse de ralenti du moteur suffisamment élevée pour ne pas risquer un calage du moteur. Dans des phases d'utilisation de l'aéronef pour lesquelles il est souhaité une poussée réduite des moteurs de propulsion, par exemple lors d'une approche d'une piste d'atterrissage ou lors d'une phase de roulage au sol, il serait parfois souhaitable de pouvoir baisser la vitesse de ralenti des moteurs de propulsion, notamment afin d'économiser du carburant.

EXPOSE DE L'INVENTION :

La présente invention a notamment pour but d'apporter une solution à ce problème. Elle concerne un système d'alimentation électrique d'un aéronef, ledit système comprenant au moins une première source électrique et une deuxième source électrique couplées ensemble pour alimenter électriquement un ensemble de charges électriques de l'aéronef, ainsi qu'un contrôleur configuré pour contrôler la première source électrique et la deuxième source électrique, la première source électrique étant couplée mécaniquement à une source primaire d'énergie à laquelle est également couplé au moins un consommateur d'énergie autre que la première source électrique,
dans lequel le contrôleur est configuré pour :

- déterminer une consommation électrique courante consommée par ledit ensemble de charges électriques.

Le système est remarquable en ce que le contrôleur est en outre configuré pour :

- déterminer une puissance nominale courante susceptible d'être délivrée par la source primaire d'énergie ;
- déterminer une puissance courante prélevée par l'au moins un consommateur d'énergie sur la source primaire d'énergie ; et
- contrôler la première source électrique et la deuxième source électrique de telle façon que d'une part la puissance prélevée par la première source électrique sur la source primaire d'énergie corresponde à une différence entre la puissance nominale courante susceptible d'être délivrée par la source primaire d'énergie et la puissance courante prélevée par l'au moins un consommateur d'énergie et que d'autre part une puissance électrique délivrée par la deuxième source électrique soit telle que la somme d'une puissance électrique délivrée par la première source électrique et de la puissance électrique délivrée par la deuxième source électrique corresponde à la consommation électrique courante.

Ainsi, le système d'alimentation électrique permet de garantir que la puissance mécanique prélevée par la première source électrique et par l'au moins un consommateur d'énergie n'est jamais supérieure à la puissance nominale courante susceptible d'être délivrée par la source primaire d'énergie. Lorsque la source primaire d'énergie correspond à un moteur de propulsion de l'aéronef, cela permet de régler un régime de ralenti du moteur de propulsion sans devoir prendre en compte des consommations électriques relatives à des charges électriques qui ne doivent être alimentées électriquement que pendant une petite partie de la durée de vol de l'aéronef, dans la mesure où le surplus de consommation électrique dû à ces charges électriques est fourni par la deuxième source électrique. Cela permet de baisser le régime de ralenti du moteur de propulsion par rapport à l'art antérieur.

Dans un mode de réalisation, la première source d'énergie électrique est commandée en mode régulation de tension et la deuxième source d'énergie électrique est commandée en mode régulation de courant. De façon particulière, le contrôleur est configuré pour déterminer une consigne de courant devant être délivré par la deuxième source électrique et pour appliquer cette consigne de courant à la deuxième source électrique, la consigne de courant étant déterminée par le contrôleur de telle façon qu'une somme d'une puissance électrique correspondant à cette consigne de courant et de la puissance électrique délivrée par la première source électrique corresponde à la consommation électrique courante.

Dans un mode de réalisation, la source primaire d'énergie correspond à un moteur de propulsion de l'aéronef ou à une turbine de secours de type RAM Air Turbine.

Dans un mode de réalisation, l'au moins un consommateur d'énergie comprend une pompe hydraulique d'un circuit hydraulique de l'aéronef.

Selon une première alternative, la puissance nominale courante susceptible d'être délivrée par la source primaire d'énergie correspond à une puissance maximale courante susceptible d'être délivrée par la source primaire d'énergie.

Selon une autre alternative, la puissance nominale courante susceptible d'être délivrée par la source primaire d'énergie correspond à un fonctionnement optimal de la source primaire d'énergie.

Dans un mode particulier de réalisation, la deuxième source d'énergie électrique comprend une batterie électrique ou un super condensateur. De façon particulière, la source primaire d'énergie correspond à un moteur de propulsion de l'aéronef et le contrôleur est configuré pour requérir une augmentation d'un régime de ralenti du moteur de propulsion lorsque la batterie électrique ou le super condensateur n'est pas suffisamment chargé pour permettre à la deuxième source électrique de délivrer la puissance électrique requise.

Dans un mode particulier de réalisation, la part de la puissance prélevée par la première source électrique sur la source primaire d'énergie correspond à la différence entre la puissance nominale courante susceptible d'être délivrée par la source primaire d'énergie et la puissance courante prélevée par l'au moins un consommateur d'énergie, diminuée d'une marge.

L'invention est également relative à un aéronef comprenant un tel système d'alimentation électrique.

DESCRIPTION DETAILLEE :

L'invention sera mieux comprise à la lecture de la description qui suit et à l'examen des figures annexées.

La figure 1 illustre un aéronef équipé d'un système d'alimentation électrique conforme à un mode de réalisation de l'invention.
La figure 2 illustre de façon schématique un système d'alimentation électrique conforme à un mode de réalisation de l'invention.

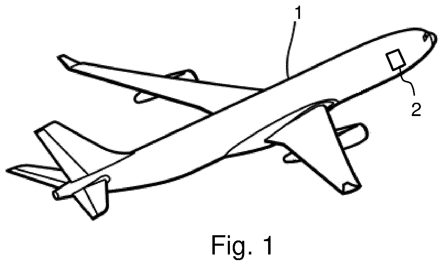

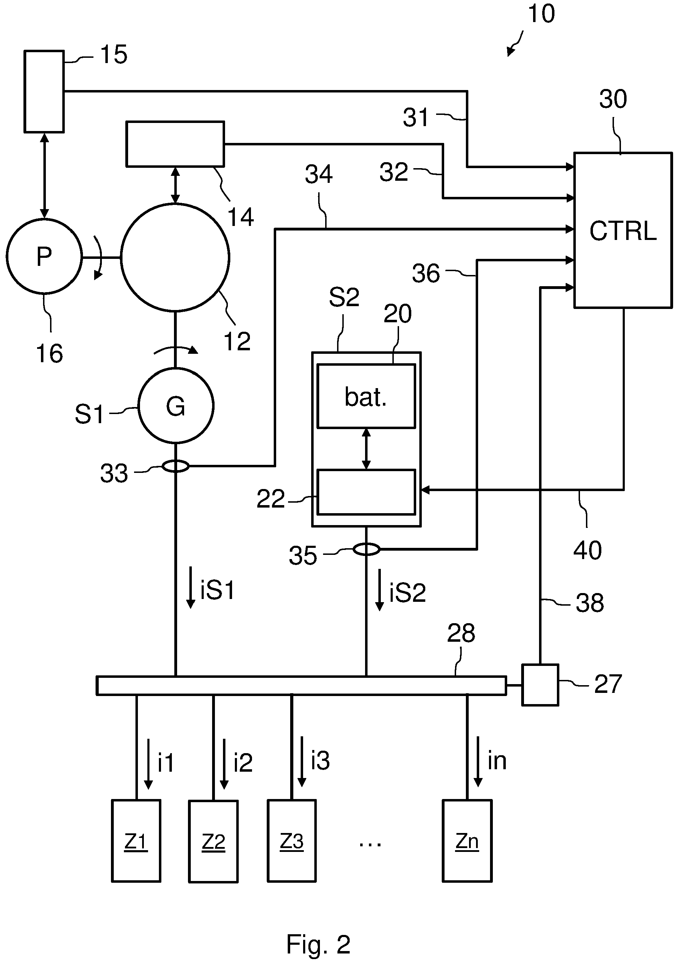

L'aéronef 1 représenté sur la figure 1 comprend un système d'alimentation électrique 10 tel que celui représenté sur la figure 2. Le système d'alimentation électrique comprend un jeu de barres d'alimentation électrique 28 alimentant un ensemble de charges électriques Z1, Z2, Z3 ... Zn. Le jeu de barres 28 est par exemple situé dans une baie avionique 2 de l'aéronef. Une première source électrique S1 et une deuxième source électrique S2 sont couplées électriquement au jeu de barres 28 de façon à l'alimenter électriquement. La première source électrique correspond à un générateur électrique, libellé G sur la figure, couplé mécaniquement à une source primaire d'énergie 12. Au moins un consommateur d'énergie 16 autre que la première source électrique S1, est également couplé mécaniquement à la source primaire d'énergie 12. Ce consommateur d'énergie est indépendant de la source primaire d'énergie 12 et il correspond par exemple à une pompe hydraulique d'un circuit hydraulique de l'aéronef, libellée P sur la figure. La source primaire d'énergie correspond par exemple à un moteur de propulsion de l'aéronef. De façon particulière, la deuxième source électrique S2 comprend un dispositif 20 de stockage d'énergie électrique, par exemple une batterie électrique ou un super condensateur. La deuxième source électrique S2 comprend également un convertisseur électrique 22 relié au dispositif de stockage d'énergie électrique 20 ainsi qu'au jeu de barres 28. Le système d'alimentation électrique 10 comprend aussi un contrôleur 30 libellé CTRL sur la figure. Le contrôleur 30 est configuré pour déterminer une puissance nominale courante susceptible d'être délivrée par la source primaire d'énergie 12. Pour cela, il est par exemple relié en entrée, par une liaison 32, à un contrôleur 14 de la source primaire d'énergie 12, par exemple à un contrôleur de type FADEC (« Full Authority Digital Engine Control » en anglais) ou EEC (« Electronic Engine Controller » en anglais) lorsque la source primaire d'énergie correspond à un moteur de propulsion de l'aéronef. Le contrôleur 30 est également configuré pour déterminer une puissance courante prélevée par l'au moins un consommateur d'énergie 16. Pour cela, il est par exemple relié en entrée, par une liaison 31, à un contrôleur 15 de l'au moins un consommateur d'énergie 16. Le contrôleur 30 est aussi configuré pour déterminer une consommation électrique courante consommée par l'ensemble de charges électriques Z1, Z2, Z3 ... Zn. Pour cela, selon un premier mode de réalisation, le contrôleur 30 est relié en entrée, par une liaison 38, à un calculateur avionique 27 associé à un coeur électrique de l'aéronef dont fait partie le jeu de barres électriques 28. Selon un deuxième mode de réalisation, le contrôleur 30 est relié en entrée, d'une part par une liaison 34, à un capteur de courant et/ou de tension 33 placé sur une liaison électrique entre la première source électrique S1 et le jeu de barres électriques 28 et d'autre part par une liaison 36, à un capteur de courant et/ou de tension 35 placé sur une liaison électrique entre la deuxième source électrique S2 et le jeu de barres électriques 28. Le contrôleur 30 est également configuré pour contrôler la première source électrique S1 et/ou la deuxième source électrique S2. Pour cela, il est par exemple relié en sortie, par une liaison 40, au moins à la deuxième source électrique S2.

En fonctionnement, le contrôleur 30 détermine une consommation électrique courante consommée par ledit ensemble de charges électriques Z1, Z2, Z3 ... Zn. Dans le premier mode de réalisation, le contrôleur acquiert une information de consommation électrique courante auprès du calculateur avionique 27. Dans le deuxième mode de réalisation, le contrôleur 30 acquiert des informations de courants électriques iS1 et iS2 en sortie des sources électriques S1 et S2, issues des capteurs de courant 33 et 35 et il calcule la consommation électrique courante en fonction desdites informations de courants électriques.

Le contrôleur 30 interroge le contrôleur 14 de la source primaire d'énergie 12 et en fonction d'informations fournies par le contrôleur 14, il détermine une puissance nominale courante $P_{12}$ susceptible d'être délivrée par la source primaire d'énergie 12. Le contrôleur 30 interroge également le contrôleur 15 de l'au moins un consommateur d'énergie 16 et en fonction d'informations fournies par le contrôleur 15, il détermine une puissance courante $P_{16}$ prélevée par l'au moins un consommateur d'énergie 16 sur la source primaire d'énergie 12.

Le contrôleur 30 contrôle la première source électrique S1 et la deuxième source électrique S2 de telle façon que la puissance prélevée par la première source électrique S1 sur la source primaire d'énergie 12 corresponde à une différence entre la puissance nominale courante susceptible d'être délivrée par la source primaire d'énergie 12 et la puissance courante prélevée par l'au moins un consommateur d'énergie 16. Cela permet de garantir que la somme des puissances prélevées sur la source primaire d'énergie 12 respectivement par la première source électrique S1 et par l'au moins un consommateur d'énergie 16 ne dépasse pas la puissance nominale courante susceptible d'être délivrée par la source primaire d'énergie 12. De plus, le contrôleur 30 contrôle la deuxième source électrique S2 de telle façon que la somme d'une puissance électrique délivrée par la deuxième source électrique S2 et d'une puissance électrique délivrée par la première source électrique S1 corresponde à la consommation électrique courante des charges électriques Z1, Z2, Z3 ... Zn. Cela permet de garantir que les sources électriques S1 et S2 fournissent une puissance suffisante pour alimenter ces charges électriques.

La puissance électrique courante $P_{12}$ susceptible d'être délivrée par la source primaire d'énergie 12 peut varier au cours de l'utilisation de l'aéronef, en particulier en fonction de phases de vol de l'aéronef. Le contrôle de la première source électrique S1 et de la deuxième source électrique S2 par le contrôleur 30 est dynamique de façon à s'adapter aux variations de la puissance électrique courante $P_{12}$ susceptible d'être délivrée par la source primaire d'énergie et aux variations de la consommation électrique courante des charges électriques. Par exemple, lorsque la source primaire d'énergie 12 correspond à un moteur de propulsion de l'aéronef, la puissance électrique courante $P_{12}$ susceptible d'être délivrée par le moteur de propulsion varie en fonction d'un régime de ralenti du moteur, ce régime de ralenti étant notamment différent selon différentes phases d'utilisation de l'aéronef (au sol, en vol en phase de montée, en vol en phase de croisière, en vol en phase d'approche d'une piste d'atterrissage, etc.).

De façon avantageuse, la part de la puissance prélevée par la première source électrique S1 sur la source primaire d'énergie 12 correspond à la différence entre la puissance nominale courante susceptible d'être délivrée par la source primaire d'énergie 12 et la puissance courante prélevée par l'au moins un consommateur d'énergie 16, diminuée d'une marge. Cette marge permet une meilleure robustesse du système d'alimentation électrique à des variations de la puissance nominale courante susceptible d'être délivrée par la source primaire d'énergie 12, à des variations de la puissance courante prélevée par l'au moins un consommateur d'énergie 16, ainsi qu'à des variations de la consommation électrique courante des charges électriques.

Dans un mode particulier de réalisation, la première source d'énergie électrique S1 est commandée en mode régulation de tension et la deuxième source d'énergie électrique S2 est commandée en mode régulation de courant. De façon avantageuse, le contrôleur 30 est alors configuré pour déterminer une consigne de courant devant être délivré par la deuxième source électrique S2 et pour appliquer cette consigne de courant à la deuxième source électrique S2 via la liaison 40. La première source électrique S1 étant commandée en mode régulation de tension, elle impose la tension appliquée au jeu de barres 28, indépendamment du courant iS1 délivré par la première source électrique S1. La deuxième source électrique S2 étant commandée en mode régulation de courant, sa consigne de courant impose le courant iS2 délivré par la deuxième source électrique S2. La première source électrique S1 adapte automatiquement le courant iS1 qu'elle délivre de façon à ce que la somme des courants iS1 et iS2 corresponde à la consommation électrique courante des charges électriques. La consigne de courant devant être délivrée par la deuxième source électrique S2 est déterminée par le contrôleur 30 de façon à ce que la puissance électrique délivrée par la deuxième source électrique soit suffisante pour permettre que la puissance prélevée par la première source électrique S1 sur la source primaire d'énergie 12 corresponde à une différence entre la puissance nominale courante susceptible d'être délivrée par la source primaire d'énergie 12 et la puissance courante prélevée par l'au moins un consommateur d'énergie 16.

Dans un exemple de réalisation non limitatif de l'invention, le contrôleur 30 acquiert par la liaison 34 une valeur courante du courant iS1 délivré par la première source électrique S1 et il calcule une puissance courante $P_{S1}$ délivrée par la première source électrique S1. Cette puissance est telle que :

$$P_{S1} = iS1 \times V$$

où V est la tension appliquée au jeu de barres 28, imposée par la première source électrique S1.

La puissance $PP_{S1}$ prélevée par la première source électrique S1 sur la source primaire d'énergie 12 est telle que :

$$P_{S1} = \eta \times PP_{S1}$$

où $\eta$ est le rendement de première la source électrique S1. Dans le cas particulier où la source primaire d'énergie 12 est un moteur de propulsion de l'aéronef et où la première source électrique S1 est un générateur électrique, $\eta$ est le rendement de conversion de puissance mécanique en puissance électrique par ce générateur électrique.

Etant donné le fonctionnement précité du contrôleur 30, la puissance $PP_{S1}$ prélevée par la première source électrique S1 sur la source primaire d'énergie 12 respecte la relation suivante :

$$PP_{S1} = P_{12} - P_{16}$$

et par conséquent, la puissance $P_{S1}$ délivrée par la première source électrique S1 respecte la relation suivante :

$$P_{S1} = \eta \times (P_{12} - P_{16})$$

Une puissance courante $P_{S2}$ délivrée par la deuxième source électrique S2 est telle que :

$$P_{S2} = iS2 \times V$$

La première source électrique S1 et la deuxième source électrique S2 étant couplées au jeu de barres électriques 28, la puissance électrique totale Pz délivrée aux charges électriques Z1, Z2, Z3 ... Zn est égale à :

$$Pz = P_{S1} + P_{S2}$$

Cette puissance électrique totale correspond à la consommation électrique courante des charges électriques. La consommation électrique courante des charges électriques peut être exprimée aussi bien sous la forme de la puissance électrique totale Pz, que sous la forme d'un courant électrique total Iz correspondant à la somme des courants électriques individuels i1, i2, i3 ... in des différentes charges électriques Z1, Z2, Z3 ... Zn. Le courant électrique total Iz est tel que :

$$Iz = iS1 + iS2$$

Etant donné que $P_{S1} = \eta \times (P_{12} - P_{16}) = iS1 \times V$, iS1 doit être égal à :

$$iS1 = \eta \times (P_{12} - P_{16}) / V$$

Par conséquent, étant donné que Iz = iS1 + iS2, iS2 doit être égal à :

$$iS2 = Iz - \eta \times (P_{12} - P_{16}) / V$$

La consigne de courant $IC_{S2}$ déterminée par le contrôleur 30 pour la deuxième source électrique S2 est donc égale à :

$$IC_{S2} = Iz - \eta \times (P_{12} - P_{16}) / V$$

De façon avantageuse, la puissance nominale courante $P_{12}$ susceptible d'être délivrée par la source primaire d'énergie 12 correspond à une puissance maximale courante susceptible d'être délivrée par la source primaire d'énergie. Cette puissance maximale courante est par exemple déterminée par le contrôleur 14 associé à la source primaire d'énergie. Selon un mode de réalisation, lorsque la source primaire d'énergie correspond à un moteur de propulsion de l'aéronef, la puissance maximale courante est déterminée par le contrôleur 14 en prenant en compte un régime courant du moteur de propulsion. Ce régime courant est supérieur ou égal à un régime de ralenti du moteur de propulsion selon les phases de vol de l'aéronef. Selon un autre mode de réalisation, la puissance maximale courante déterminée par le contrôleur 14 correspond à un régime de ralenti du moteur de propulsion.

Dans un mode particulier de réalisation, la source primaire d'énergie 12 correspond à une turbine de secours de type RAT (« Ram Air Turbine » en anglais). Dans un mode de réalisation, la puissance nominale courante $P_{12}$ susceptible d'être délivrée par la source primaire d'énergie 12 correspond à une puissance maximale courante susceptible d'être délivrée par la turbine de secours de type RAT. Dans un autre mode de réalisation, la puissance nominale courante $P_{12}$ susceptible d'être délivrée par la source primaire d'énergie 12 correspond à un fonctionnement optimal de la turbine de secours de type RAT. Le document « Hybrid power génération system for aircraft electrical emergency network » décrit un procédé de recherche d'un point de fonctionnement optimal dit MPPT (« Maximum Power Point Tracking » en anglais) d'une telle turbine de secours de type RAT. Ce document est disponible à l'adresse internet :

https://hal.archives-ouvertes.fr/hal-01722852/document

Dans un mode avantageux de réalisation, lorsque la deuxième source électrique S2 comprend un élément rechargeable 20 tel qu'une batterie électrique ou un super condensateur, lorsque la puissance nominale courante $P_{12}$ susceptible d'être délivrée par la source primaire d'énergie 12 est suffisamment élevée de telle façon que la consigne de courant $IC_{S2} = Iz - \eta \times (P_{12} - P_{16}) / V$ déterminée par le contrôleur 30 soit négative, le convertisseur 22 commande une recharge de l'élément rechargeable 20.

Dans un mode particulier de réalisation, lorsque la source primaire d'énergie 12 correspond à un moteur de propulsion de l'aéronef et lorsque l'élément rechargeable 20 n'est pas suffisamment chargé pour fournir la puissance $P_{S2}$ correspondant à la consigne de courant $IC_{S2}$, le contrôleur 30 envoie une requête au contrôleur 14 pour requérir une augmentation d'un régime de ralenti du moteur de propulsion. Une telle augmentation du régime de ralenti permet alors d'augmenter la puissance mécanique susceptible d'être prélevée par la première source électrique S1 sur le moteur de propulsion, de façon à permettre à la première source électrique S1 de fournir une puissance électrique suffisante pour l'alimentation électrique des charges électriques.

**Revendications**

1. Système d'alimentation électrique (10) d'un aéronef (1), ledit système comprenant au moins une première source électrique (S1) et une deuxième source électrique (S2) couplées ensemble pour alimenter électriquement un ensemble de charges électriques (Z1, Z2, Z3 ... Zn) de l'aéronef, ainsi qu'un contrôleur (30) configuré pour contrôler la première source électrique et la deuxième source électrique, la première source électrique (S1) étant couplée mécaniquement à une source primaire d'énergie à laquelle est également couplé au moins un consommateur d'énergie autre que la première source électrique,

dans lequel le contrôleur (30) est configuré pour :

- déterminer une consommation électrique courante consommée par ledit ensemble de charges électriques ;

le contrôleur (30) étant en outre configuré pour :

- déterminer une puissance nominale courante ($P_{12}$) susceptible d'être délivrée par la source primaire d'énergie ;
- déterminer une puissance courante ($P_{16}$) prélevée par l'au moins un consommateur d'énergie sur la source primaire d'énergie ; et
- contrôler la première source électrique (S1) et la deuxième source électrique (S2) de telle façon que :

- d'une part la puissance ($PP_{S1}$) prélevée par la première source électrique sur la source primaire d'énergie corresponde à une différence entre la puissance nominale courante ($P_{12}$) susceptible d'être délivrée par la source primaire d'énergie et la puissance courante ($P_{16}$) prélevée par l'au moins un consommateur d'énergie de façon à garantir que la puissance mécanique prélevée par la première source électrique et par l'au moins un consommateur d'énergie n'est jamais supérieure à la puissance nominale courante susceptible d'être délivrée par la source primaire d'énergie, et
- d'autre part une puissance électrique ($P_{S2}$) délivrée par la deuxième source électrique soit telle que la somme d'une puissance électrique ($P_{S1}$) délivrée par la première source électrique et de la puissance électrique délivrée par la deuxième source électrique corresponde à la consommation électrique courante.

2. Système selon la revendication 1, **caractérisé en ce que** la première source d'énergie électrique (S1) est commandée en mode régulation de tension et la deuxième source d'énergie électrique (S2) est commandée en mode régulation de courant.

3. Système selon la revendication précédente, **caractérisé en ce que** le contrôleur (30) est configuré pour déterminer une consigne de courant ($IC_{S2}$) devant être délivré par la deuxième source électrique (S2) et pour appliquer cette consigne de courant à la deuxième source électrique, la consigne de courant étant déterminée par le contrôleur de telle façon qu'une somme d'une puissance électrique ($P_{S2}$) correspondant à cette consigne de courant et de la puissance électrique ($P_{S1}$) délivrée par la première source électrique (S1) corresponde à la consommation électrique courante.

4. Système selon l'une quelconque des revendications précédentes, **caractérisé en ce que** la source primaire d'énergie correspond à un moteur de propulsion de l'aéronef ou à une turbine de secours de type RAM Air Turbine.

5. Système selon l'une quelconque des revendications précédentes, **caractérisé en ce que** l'au moins un consommateur d'énergie (16) comprend une pompe hydraulique d'un circuit hydraulique de l'aéronef.

6. Système selon l'une quelconque des revendications précédentes, **caractérisé en ce que** la puissance nominale courante ($P_{12}$) susceptible d'être délivrée par la source primaire d'énergie (12) correspond à une puissance maximale courante susceptible d'être délivrée par la source primaire d'énergie.

7. Système selon l'une quelconque des revendications 1 à 5, **caractérisé en ce que** la puissance nominale courante ($P_{12}$) susceptible d'être délivrée par la source primaire d'énergie (12) correspond à un fonctionnement optimal de la source primaire d'énergie.

8. Système selon l'une quelconque des revendications précédentes, **caractérisé en ce que** la deuxième source d'énergie électrique (S2) comprend une batterie électrique ou un super condensateur.

9. Système selon la revendication précédente, **caractérisé en ce que** la source primaire d'énergie correspondant à un moteur de propulsion de l'aéronef, le contrôleur est configuré pour requérir une augmentation d'un régime de ralenti du moteur de propulsion lorsque la batterie électrique ou le super condensateur n'est pas suffisamment chargé pour permettre à la deuxième source électrique de délivrer la puissance électrique requise.

10. Système selon l'une quelconque des revendications précédentes, **caractérisé en ce que** la part de la puissance ($PP_{S1}$) prélevée par la première source électrique (S1) sur la source primaire d'énergie (12) correspond à la différence entre la puissance nominale courante ($P_{12}$) susceptible d'être délivrée par la source primaire d'énergie et la puissance courante ($P_{16}$) prélevée par l'au moins un consommateur d'énergie, diminuée d'une marge.

11. Aéronef (1), **caractérisé en ce qu'**il comprend un système d'alimentation électrique (10) selon l'une quelconque des revendications précédentes.

## Patentansprüche

1. Stromversorgungssystem (10) eines Luftfahrzeugs (1), wobei das System wenigstens eine erste Stromquelle (S1) und eine zweite Stromquelle (S2), die zusammengekoppelt sind, um eine Anordnung von elektrischen Lasten (Z1, Z2, Z3 ... Zn) des Luftfahrzeugs mit Strom zu versorgen, sowie eine Steuerung (30) umfasst, die dazu ausgebildet ist, die erste Stromquelle und die zweite Stromquelle zu steuern, wobei die erste Stromquelle (S1) mechanisch an eine Primärenergiequelle gekoppelt ist, an die ebenfalls wenigstens ein anderer Energieverbraucher als die erste Stromquelle gekoppelt ist,

wobei die Steuerung (30) dazu ausgebildet ist:

- einen aktuellen Stromverbrauch zu bestimmen, der von der Anordnung von elektrischen Lasten verbraucht wird;

wobei die Steuerung (30) ferner dazu ausgebildet ist:

- eine aktuelle Nennleistung ($P_{12}$) zu bestimmen, die von der Primärenergiequelle geliefert werden kann;
- eine aktuelle Leistung ($P_{16}$) zu bestimmen, die von dem wenigstens einen Energieverbraucher aus der Primärenergiequelle entnommen wird; und
- die erste Stromquelle (S1) und die zweite Stromquelle (S2) so zu steuern, dass:

- einerseits die Leistung (PPsi), die von der ersten Stromquelle aus der Primärenergiequelle entnommen wird, einer Differenz zwischen der aktuellen Nennleistung ($P_{12}$), die von der Primärenergiequelle geliefert werden kann, und der aktuellen Leistung ($P_{16}$), die von dem wenigstens einen Energieverbraucher entnommen wird, entspricht, um zu gewährleisten, dass die mechanische Leistung, die von der ersten Stromquelle und von dem wenigstens einen Energieverbraucher entnommen wird, nie höher als die aktuelle Nennleistung ist, die von der Primärenergiequelle geliefert werden kann, und
- andererseits eine elektrische Leistung ($P_{S2}$), die von der zweiten Stromquelle geliefert wird, so ist, dass die Summe einer elektrischen Leistung ($P_{S1}$), die von der ersten Stromquelle geliefert wird, und der elektrischen Leistung, die von der zweiten Stromquelle geliefert wird, dem aktuellen Stromverbrauch entspricht.

2. System nach Anspruch 1, **dadurch gekennzeichnet, dass** die erste Quelle elektrischer Energie (S1) im Spannungsregelungsmodus gesteuert wird und die zweite Quelle elektrischer Energie (S2) im Stromregelungsmodus gesteuert wird.

3. System nach dem vorhergehenden Anspruch, **dadurch gekennzeichnet, dass** die Steuerung (30) dazu ausgebildet ist, einen Stromsollwert ($IC_{S2}$) zu bestimmen, der von der zweiten Stromquelle (S2) geliefert werden soll, und diesen Stromsollwert auf die zweite Stromquelle anzuwenden, wobei der Stromsollwert so von der Steuerung bestimmt wird, dass eine Summe einer elektrischen Leistung ($P_{S2}$), die diesem Stromsollwert entspricht, und der elektrischen Leistung ($P_{S1}$), die von der ersten Stromquelle (S1) geliefert wird, dem aktuellen Stromverbrauch entspricht.

4. System nach einem der vorhergehenden Ansprüche, **dadurch gekennzeichnet, dass** die Primärenergiequelle einem Antriebsmotor des Luftfahrzeugs oder einer Notfallturbine vom Typ RAM-Air-Turbine entspricht.

5. System nach einem der vorhergehenden Ansprüche, **dadurch gekennzeichnet, dass** der wenigstens eine Energieverbraucher (16) eine Hydraulikpumpe eines Hydraulikkreises des Luftfahrzeugs umfasst.

6. System nach einem der vorhergehenden Ansprüche, **dadurch gekennzeichnet, dass** die aktuelle Nennleistung ($P_{12}$), die von der Primärenergiequelle (12) geliefert werden kann, einer aktuellen maximalen Leistung entspricht, die von der Primärenergiequelle geliefert werden kann.

7. System nach einem der Ansprüche 1 bis 5, **dadurch gekennzeichnet, dass** die aktuelle Nennleistung ($P_{12}$), die von der Primärenergiequelle (12) geliefert werden kann, einem optimalen Betrieb der Primärenergiequelle entspricht.

8. System nach einem der vorhergehenden Ansprüche, **dadurch gekennzeichnet, dass** die zweite Stromquelle (S2) eine elektrische Batterie oder einen Superkondensator umfasst.

9. System nach dem vorhergehenden Anspruch, **dadurch gekennzeichnet, dass**, die Primärenergiequelle einem Antriebsmotor des Luftfahrzeugs entsprechend, die Steuerung dazu ausgebildet ist, eine Erhöhung einer Leerlaufdrehzahl des Antriebsmotors anzufordern, wenn die elektrische Batterie oder der Superkondensator nicht ausreichend geladen ist, um es der zweiten Stromquelle zu ermöglichen, die erforderliche elektrische Leistung zu liefern.

10. System nach einem der vorhergehenden Ansprüche, **dadurch gekennzeichnet, dass** der Anteil der Leistung ($PP_{si}$), die von der ersten Stromquelle (S1) aus der Primärenergiequelle (12) entnommen wird, der Differenz zwischen der aktuellen Nennleistung ($P_{12}$), die von der Primärenergiequelle geliefert werden kann, und der aktuellen Leistung ($P_{16}$), die von dem wenigstens einen Energieverbraucher entnommen wird, abzüglich eines Spielraums, entspricht.

11. Luftfahrzeug (1), **dadurch gekennzeichnet, dass** es ein Stromversorgungssystem (10) nach einem der vorhergehenden Ansprüche umfasst.

## Claims

1. Electrical supply system (10) of an aircraft (1), said system comprising at least a first electrical source (S1) and a second electrical source (S2), which are coupled together in order to electrically supply a group of electrical loads (Z1, Z2, Z3... Zn) of the aircraft, as well as a controller (30) configured to control the first electrical source and the second electrical source, the first electrical source (S1) being mechanically coupled to a primary energy source, to which at least one energy consumer other than the first electrical source is also coupled,

   wherein the controller (30) is configured to:

   - determine an instantaneous electrical consumption consumed by said group of electrical loads;

   the controller (30) furthermore being configured to:

   - determine an instantaneous nominal power ($P_{12}$) capable of being delivered by the primary energy source;
   - determine an instantaneous power ($P_{16}$) drawn by the at least one energy consumer from the primary energy source; and
   - control the first electrical source (S1) and the second electrical source (S2) so that:

      - on the one hand the power ($PP_{S1}$) drawn by the first electrical source from the primary energy source corresponds to a difference between the instantaneous nominal power ($P_{12}$) capable of be-

ing delivered by the primary energy source and the instantaneous power ($P_{16}$) drawn by the at least one energy consumer, so as to ensure that the mechanical power drawn by the first electrical source and by the at least one energy consumer is never greater than the instantaneous nominal power capable of being delivered by the primary energy source, and

- on the other hand an electrical power ($P_{S2}$) delivered by the second electrical source is such that the sum of an electrical power ($P_{S1}$) delivered by the first electrical source and the electrical power delivered by the second electrical source corresponds to the instantaneous electrical consumption.

2. System according to Claim 1, **characterized in that** the first electrical energy source (S1) is controlled in voltage regulation mode and the second electrical energy source (S2) is controlled in current regulation mode.

3. System according to the preceding claim, **characterized in that** the controller (30) is configured to determine a current setpoint ($IC_{S2}$) that needs to be delivered by the second electrical source (S2) and to apply this current setpoint to the second electrical source, the current setpoint being determined by the controller so that a sum of an electrical power ($P_{S2}$) corresponding to this current setpoint and the electrical power (Psi) delivered by the first electrical source (S1) corresponds to the instantaneous electrical consumption.

4. System according to any one of the preceding claims, **characterized in that** the primary energy source corresponds to a propulsion engine of the aircraft or to an emergency turbine of the ram air turbine type.

5. System according to any one of the preceding claims, **characterized in that** the at least one energy consumer (16) comprises a hydraulic pump of a hydraulic circuit of the aircraft.

6. System according to any one of the preceding claims, **characterized in that** the instantaneous nominal power ($P_{12}$) capable of being delivered by the primary energy source (12) corresponds to an instantaneous maximum power capable of being delivered by the primary energy source.

7. System according to any one of Claims 1 to 5, **characterized in that** the instantaneous nominal power ($P_{12}$) capable of being delivered by the primary energy source (12) corresponds to an optimal operation of the primary energy source.

8. System according to any one of the preceding claims, **characterized in that** the second electrical energy source (S2) comprises an electrical battery or a supercapacitor.

9. System according to the preceding claim, **characterized in that**, with the primary energy source corresponding to a propulsion engine of the aircraft, the controller is configured to request an increase in an idle speed of the propulsion engine when the electrical battery or the supercapacitor is not sufficiently charged to allow the second electrical source to deliver the required electrical power.

10. System according to any one of the preceding claims, **characterized in that** the part of the power ($PP_{S1}$) drawn by the first electrical source (S1) from the primary energy source (12) corresponds to the difference between the instantaneous nominal power ($P_{12}$) capable of being delivered by the primary energy source and the instantaneous power ($P_{16}$) drawn by the at least one energy consumer, less a margin.

11. Aircraft (1), **characterized in that** it comprises an electrical supply system (10) according to any one of the preceding claims.

Fig. 1

Fig. 2

**RÉFÉRENCES CITÉES DANS LA DESCRIPTION**

**Documents brevets cités dans la description**

- FR 3067874 A1